(19) Europäisches Patentamt
European Patent Office
Office européen des brevets

(11) **EP 3 312 515 B1**

(12) **EUROPEAN PATENT SPECIFICATION**

(45) Date of publication and mention of the grant of the patent:
**26.08.2020 Bulletin 2020/35**

(21) Application number: **15896406.4**

(22) Date of filing: **24.09.2015**

(51) Int Cl.:
**F24D 3/18** *(2006.01)*   **F24D 19/10** *(2006.01)*

(86) International application number:
**PCT/JP2015/076849**

(87) International publication number:
**WO 2016/208088 (29.12.2016 Gazette 2016/52)**

(54) **HEAT MEDIUM SYSTEM**

**HEIZMEDIUMSYSTEM**

**SYSTÈME DE MILIEU THERMIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2015 JP 2015124942**

(43) Date of publication of application:
**25.04.2018 Bulletin 2018/17**

(73) Proprietor: **Mitsubishi Electric Corporation Chiyoda-ku Tokyo 100-8310 (JP)**

(72) Inventors:
• **AKAGI, Satoshi Tokyo 100-8310 (JP)**
• **MATSUMURA, Yasunari Tokyo 100-8310 (JP)**
• **WATANABE, Naoki Tokyo 100-8310 (JP)**

(74) Representative: **Pfenning, Meinig & Partner mbB Patent- und Rechtsanwälte Joachimsthaler Straße 10-12 10719 Berlin (DE)**

(56) References cited:
EP-A1- 2 505 940     EP-A1- 2 530 406
EP-A2- 2 610 558     JP-A- H08 210 700
JP-A- 2003 247 751     JP-A- 2004 225 959

**Description**

[Technical Field]

The present invention relates to a heating medium system.

[Background Art]

There is known a heating medium system in which water or other liquid heating media are heated by a heating device such as, e.g., a heat pump, circulated to a circuit, and used for heat storage, indoor-heating by heat exchange, and direct release of the heating medium.

PTL 1 shown below discloses a heat pump hot water indoor-heating system that includes a control section for controlling the pump head of a circulation pump that circulates a water heating medium such that an outgoing/return water temperature difference falls within a predetermined range in accordance with the detected value of an outgoing/return water temperature detection section that detects the outgoing/return water temperature difference as a difference between the temperature of the water heating medium that moves toward an indoor radiator from a heat pump heat source device (outgoing water temperature) and the temperature of the water heating medium that returns to the heat source device from the indoor radiator (return water temperature).

PTL 2 shown below describes a technology that does not require a temperature sensor to be provided to an outlet of an auxiliary heat source. A usage-side refrigerant circuit is composed of a heat source-side compressor, a heat source-side heat exchanger, and a usage-side heat exchanger capable of heating an aqueous medium. An aqueous medium circuit is composed of a circulation pump and the usage-side heat exchanger, and is connected to a warm-water heating unit and the like. An auxiliary heat source is provided to an aqueous medium outlet side of the usage-side heat exchanger in the aqueous medium circuit, and further heats the aqueous medium in the aqueous medium circuit. A heating capability computation unit computes a heating capability of the warm-water heating unit and the like, on the basis of an operating state quantity of constituent devices of the heat source-side refrigerant circuit or of heat source-side refrigerant. A circulation flow rate computation unit computes a circulation flow rate of the aqueous medium in the aqueous medium circuit, on the basis of an outlet/inlet temperature difference and the heating capability. A prediction unit predicts an outlet temperature of the aqueous medium in the auxiliary heat source on the basis of the circulation flow rate and of heat source capability information.

[Citation List]

[Patent Literature]

[PTL 1] Japanese Patent Application Publication No. 2009-287895
[PTL 2] European Patent Application EP 2 530 406 A1

[Summary of Invention]

[Technical Problem]

In the heating medium system, the temperature of the heating medium that moves toward the indoor radiator or the like from the heating device tends to overshoot a target temperature under various conditions. In the conventional art, there are cases where it is not possible to prevent the overshooting of the temperature of the heating medium.

The present invention has been made in order to solve the above problem, and an object thereof is to provide the heating medium system capable of reliably preventing the overshooting of the temperature of the heating medium.

[Solution to Problem]

A heating medium system of the invention as defined in claim 1 includes amongst others : a pump configured to circulate a heating medium in a circuit; a heating device configured to heat the heating medium; pump control means configured to control an operation of the pump such that a circulation flow rate of the heating medium second heating device will be activated, wherein the pump control means is configured to: control the operation of the pump such that the circulation flow rate of the heating medium or the operating speed of the pump matches a first target value in a case where it is predicted that the second heating device will not be activated; and control the operation of the pump such that the circulation flow rate of the heating medium or the operating speed of the pump matches a second target value larger than the first target value in a case where it is predicted that the second heating device will be activated.

A heating medium system which does not form part of the invention includes: a pump configured to circulate a heating medium in a circuit; a heating device configured to heat the heating medium; pump control means configured to control the pump; heating power control means configured to control a heating power of the heating device such that a heating medium supply temperature, which is a temperature of the heating medium sent to a heat receiving section that receives heat of the heating medium, matches a first target temperature; and sign determination means configured to determine presence or absence of a sign of overshooting of the heating medium supply temperature, wherein the pump control means is configured to: control an operation of the pump such that a circulation flow rate of the heating medium or an operating speed of the pump matches a target value in a case where it is determined that the sign is not present; and control the operation of the pump such that the heating medium supply temperature matches a second target temperature higher than the first target temperature in a case where it is determined that the sign is present.

[Advantageous Effects of Invention]

According to the heating medium system of the present invention, it becomes possible to reliably prevent the overshooting of the temperature of the heating medium.

[Brief Description of Drawings]

Fig. 1 is a configuration diagram showing a heating medium system of an embodiment of the present invention.
Fig. 2 is a block diagram of a first example of a heating medium system.
Fig. 3 is a hardware configuration diagram of a first example of a controller of the heating medium system.
Fig. 4 is a flowchart of a first example of a routine executed by the controller of the heating medium system.
Fig. 5 is a flowchart showing a first example of a method for determining a presence or absence of a sign of an overshooting of heating medium supply temperature.
Fig. 6 is a flowchart showing a second example of a method for determining the presence or absence of the sign of the overshooting of the heating medium supply temperature.
Fig. 7 is a block diagram of a second example of a heating medium system.
Fig. 8 is a flowchart of a second example of a routine executed by a controller of the heating medium system.
Fig. 9 is a flowchart of a third example of a routine executed by a controller of a heating medium system.
Fig. 10 is a block diagram of a heating medium system of an embodiment of the present invention.
Fig. 11 is a flowchart of a routine executed by a controller of the heating medium system of an embodiment of the present invention.
Fig. 12 is a flowchart showing a first example of a method for predicting whether an auxiliary heat source will be activated.
Fig. 13 is a flowchart showing a second example of the method for predicting whether the auxiliary heat source will be activated.

[Description of Embodiments]

Hereinbelow, examples and embodiments of the present invention will be described with reference to the drawings. Note that common elements in the respective drawings are designated by the same reference numerals, and the repeated description thereof will be simplified or omitted. Note that the present invention is not limited to the following embodiments, and can be variously modified without departing from the gist of the present invention. In principle, the numbers, dispositions, orientations, shapes, and sizes of devices, apparatuses, components and the like in the present invention are not limited to the numbers, dispositions, orientations, shapes, and sizes shown in the drawings. In addition, the present invention includes all combinations of, among configurations described in the following examples and embodiments, configurations that can be combined.

Example 1

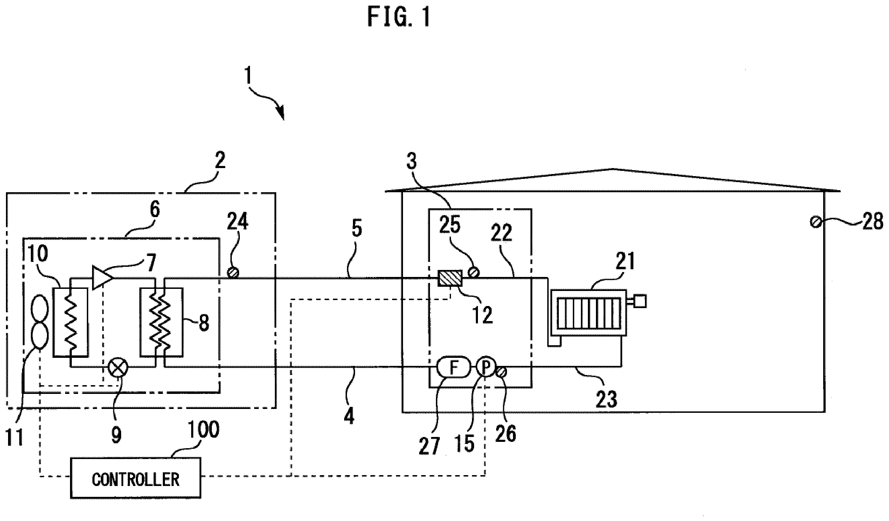

Fig. 1 is a configuration diagram showing a heating medium system of Example 1. A heating medium system 1 of the present embodiment shown in Fig. 1 is applied to an indoor-heating system that heats the interior of a room. The heating medium system 1 includes a first unit 2, a second unit 3, and a controller 100. In the present embodiment, the first unit 2 is placed outdoors, and the second unit 3 is placed indoors. The second unit 3 may also be placed outdoors.

The first unit 2 and the second unit 3 are connected via a heating medium pipe 4 and a heating medium pipe 5. The heating medium pipe 4 and the heating medium pipe 5 constitute part of a circuit of the heating medium.

The first unit 2 includes a first casing that houses a main heat source 6. The main heat source 6 is an example of a heating device (first heating device) that heats a liquid heating medium. As the heating medium, it is possible to use, e.g., water, brine, and antifreeze solution. The main heat source 6 in the present embodiment is a heat pump heating device. The main heat source 6 includes a refrigerant circuit. The refrigerant circuit includes a compressor 7, a high-temperature side heat exchanger 8, a decompression device 9, and a low-temperature side heat exchanger 10. The main heat source 6 heats the heating medium by performing an operation of a heat pump cycle (refrigeration cycle) with the refrigerant circuit. The high-temperature side heat exchanger 8 heats the heating medium by exchanging heat between the refrigerant compressed by the compressor 7 and the heating medium. The decompression device 9 reduces the pressure of the refrigerant having passed through the high-temperature side heat exchanger 8. The decompression device 9 is constituted by, e.g., an expansion valve. The low-temperature side heat exchanger 10 is an evaporator that evaporates the refrigerant having passed though the decompression device 9. In the present embodiment, the low-temperature side heat exchanger 10 exchanges heat between outdoor air and the refrigerant. The main heat source 6 includes a blower 11 that blows outside air into the low-temperature side heat exchanger 10. The low-temperature side heat exchanger 10 may exchange heat between a heat source other than outside air (e.g., groundwater, wastewater, and solar heated water) and the refrigerant. As the refrigerant, it is possible to use, e.g., $CO_2$.

The compressor 7, the decompression device 9, and the blower 11 are connected to the controller 100. The controller 100 is capable of controlling the heating power of the main heat source 6. The heating power is an amount of heat received by the heating medium per unit time. The controller 100 is capable of controlling the heating power of the main heat source 6 by, e.g., changing the operating frequency of the compressor 7 using inverter control. The controller 100 may control the heating power of the main heat source 6 by changing the opening of the decompression device 9.

The second unit 3 includes a second casing that houses an auxiliary heat source 12. The auxiliary heat source 12 is an example of a heating device (second heating device) that heats the heating medium at a position downstream of the main heat source 6 in the case where the heating power of the main heat source 6 is insufficient. As the auxiliary heat source 12, it is possible to use, e.g., an electric heater or a fuel heater. In the case of the fuel heater, its fuel may be any fuel such as gas, kerosene, heavy oil, and coal. The auxiliary heat source 12 is automatically activated in the case where the heating power of the main heat source 6 is insufficient. Alternatively, the auxiliary heat source 12 may also be activated by an operation of a user.

In the second unit 3, a heating medium pump 15 is further housed. The auxiliary heat source 12 and the heating medium pump 15 are connected to the controller 100. The outlet of the heating medium pump 15 is connected to the inlet of the heating medium of the high-temperature side heat exchanger 8 in the first unit 2 via the heating medium pipe 4. The outlet of the heating medium of the high-temperature side heat exchanger 8 is connected to the inlet of the auxiliary heat source 12 in the second unit 3 via the heating medium pipe 5.

An indoor-heating appliance 21 heats indoor air with heat of the heating medium supplied from the second unit 3. The outlet of the auxiliary heat source 12 is connected to the inlet of the heating medium of the indoor-heating appliance 21 via a heating medium pipe 22. One end of a heating medium pipe 23 is connected to the outlet of the heating medium of the indoor-heating appliance 21. The other end of the heating medium pipe 23 is connected to the inlet of the heating medium pump 15. As the indoor-heating appliance 21, it is possible to use, e.g., a floor heating panel, a radiator, a panel heater, and a fan convector. A plurality of the indoor-heating appliances 21 may also be connected between the heating medium pipe 22 and the heating medium pipe 23. In this case, a method for connecting the plurality of the indoor-heating appliances 21 may be any of series connection, parallel connection, and a combination of the series connection and the parallel connection.

The indoor-heating appliance 21 is an example of a heat receiving section that receives heat of the heating medium. The heat receiving section in the present invention may be an item other than the indoor-heating appliance. In the present invention, for example, a hot water supply heat exchanger that heats water by exchanging heat between the heating medium and water may be provided as the heat receiving section. The heat receiving section may include an item that uses a heated heating medium by directly discharging the heated heating medium. In the present invention, a plurality of types of the heat receiving sections may be provided. In this case, a switching valve that switches the supply destination of the heating medium to any of the plurality of types of the heat receiving sections may be provided.

The operating speed (rotation speed) of the heating medium pump 15 is variable. As the heating medium pump 15, it is possible to use, e.g., a pump that includes a pulse width modulation control (PWM control) type DC motor of which the operating speed can be changed with a speed command voltage from the controller 100.

In the heating medium pipe 5 downstream of the main heat source 6 and upstream of the auxiliary heat source 12, a main heat source outlet temperature sensor 24 is installed. Hereinafter, the temperature of the heating medium downstream of the main heat source 6 and upstream of the auxiliary heat source 12 is referred to as a "main heat source outlet temperature". The main heat source outlet temperature sensor 24 is capable of detecting the main heat source outlet temperature. In the present embodiment, the main heat source outlet temperature sensor 24 is installed in the first unit 2.

In the flow path of the heating medium downstream of the auxiliary heat source 12 and upstream of the indoor-heating appliance 21 (heat receiving section), an auxiliary heat source outlet temperature sensor 25 is installed. Hereinafter, the temperature of the heating medium downstream of the auxiliary heat source 12 and upstream of the indoor-heating appliance 21 (heat receiving section) is referred to as an "auxiliary heat source outlet temperature". The auxiliary heat source outlet temperature sensor 25 is capable of detecting the auxiliary heat source outlet temperature.

In the following description, the temperature of the heating medium sent to the heat receiving section (the indoor-heating appliance 21 in the present embodiment) is referred to as a "heating medium supply temperature". When the auxiliary heat source 12 does not operate, the main heat source outlet temperature detected by the main heat source outlet temperature sensor 24 can be used as the heating medium supply temperature. When the auxiliary heat source 12 operates, the auxiliary heat source outlet temperature detected by the auxiliary heat source outlet temperature sensor 25 can be used as the heating medium supply temperature.

In the flow path of the heating medium downstream of the indoor-heating appliance 21 (heat receiving section) and upstream of the main heat source 6, a main heat source inlet temperature sensor 26 is installed. The main heat source inlet temperature sensor 26 is an example of a return temperature sensor that detects a return temperature as the temperature of the heating medium that returns to the main heat source 6 from the indoor-heating appliance 21 (heat receiving section). In the present embodiment, the main heat source inlet temperature sensor 26 is installed upstream of the heating medium pump 15. The main heat source inlet temperature sensor 26 may be installed in the heating medium pipe 4 downstream of the heating medium pump 15.

A flow rate sensor 27 detects the flow rate of the heating medium that circulates in the circuit. In the present embodiment, the flow rate sensor 27 is installed in the heating medium pipe 4 between the heating medium pump 15 and the main heat source 6. A room temperature sensor 28 detects the room temperature of a room in which the indoor-heating appliance 21 is installed.

The controller 100 controls the operations of the main heat source 6, the auxiliary heat source 12, and the heating medium pump 15. The controller 100 activates the auxiliary heat source 12 in the case where the heating power of the main heat source 6 is insufficient.

In the present embodiment, a configuration is adopted in which the first unit 2 that houses the main heat source 6 is separate from the second unit 3 that houses the auxiliary heat source 12. In the present embodiment, the heating medium pump 15 and the auxiliary heat source 12 are housed in the second unit 3. However, at least one of the heating medium pump 15 and the auxiliary heat source 12 may be housed in the first unit 2.

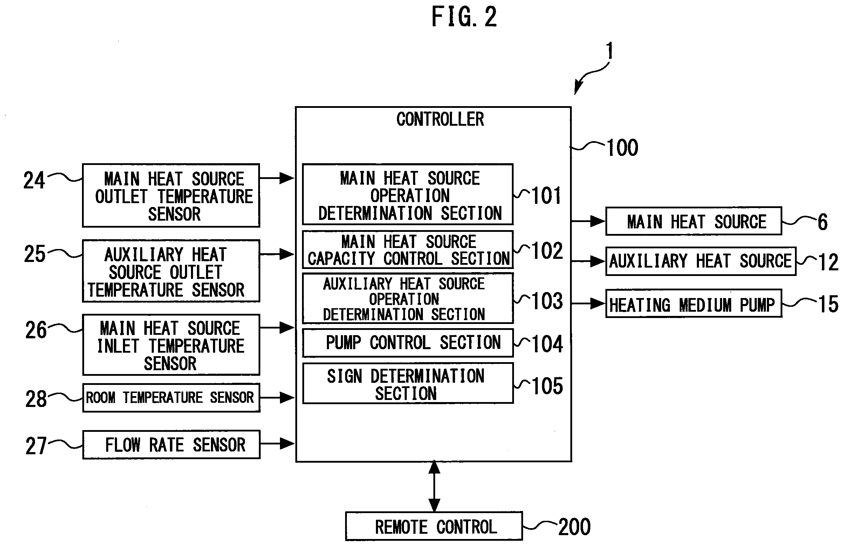

Fig. 2 is a block diagram of the heating medium system 1 of Example 1. As shown in Fig. 2, to the controller 100, information detected by the auxiliary heat source outlet temperature sensor 25, the main heat source outlet temperature sensor 24, the main heat source inlet temperature sensor 26, the flow rate sensor 27, and the room temperature sensor 28 is inputted. The controller 100 includes a main heat source operation determination section 101, a main heat source capacity control section 102, an auxiliary heat source operation determination section 103, a pump control section 104, and a sign determination section 105. The controller 100 and a remote control 200 are connected to each other so as to be capable of interactive data communication. The communication between the controller 100 and the remote control 200 may be wired communication or wireless communication. The remote control 200 includes an operation section such as a switch operated by a user, and a display section that displays information on the state of the heating medium system 1 or the like. The controller 100 receives information from the auxiliary heat source outlet temperature sensor 25, the main heat source outlet temperature sensor 24, the main heat source inlet temperature sensor 26, the flow rate sensor 27, the room temperature sensor 28, and the remote control 200, and controls the operations of the main heat source 6, the auxiliary heat source 12, and the heating medium pump 15 based on the information.

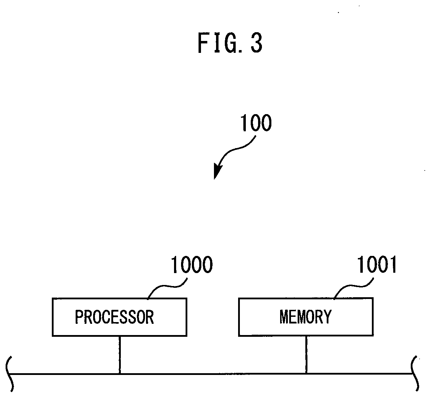

Fig. 3 is a hardware configuration diagram of the controller 100 of the heating medium system 1 of Example 1. The controller 100 includes a processor 1000 and a memory 1001. The function of the controller 100 is achieved by execution of a program stored in the memory 1001 by the processor 1000. A plurality of the processors and a plurality of the memories may achieve the function of the controller 100 in cooperation with each other.

The user can perform, e.g., the following operations by controlling the remote control 200.

(1) The user can directly start and end an indoor-heating operation.
(2) The user can set a time period in which the indoor-heating operation is performed.
(3) The user can set a target value (target temperature) of the temperature of the heating medium (heating medium supply temperature) sent to the indoor-heating appliance 21 in the indoor-heating operation.
(4) The user can set a target room temperature in the indoor-heating operation.

The controller 100 may automatically start and stop the indoor-heating operation (the operation in which the heating medium is heated) based on the target room temperature set by the user and the detected temperature of the room temperature sensor 28. In this case, the main heat source operation determination section 101 determines whether the operation of the main heat source 6 is necessary. In addition, the controller 100 may calculate the target value (target temperature) of the heating medium supply temperature in the indoor-heating operation according to the difference between the target room temperature set by the user and the detected temperature of the room temperature sensor 28.

The main heat source capacity control section 102 is capable of controlling the heating power of the main heat source 6 by specifying, e.g., the operating frequency of the compressor 7. The main heat source capacity control section 102 is capable of controlling the heating medium supply temperature such that the heating medium supply temperature matches the target temperature by controlling the heating power of the main heat source 6. The main heat source capacity control section 102 is capable of controlling the heating medium supply temperature such that the heating medium supply temperature matches the target temperature by controlling the heating power of the main heat source 6 based on a deviation between the heating medium supply temperature detected by the main heat source outlet temperature sensor 24 or the auxiliary heat source outlet temperature sensor 25 and the target temperature.

The pump control section 104 includes a function of controlling the operation of the heating medium pump 15 such that a circulation flow rate of the heating medium matches a target value. The pump control section 104 is capable of controlling the circulation flow rate of the heating medium such that the circulation flow rate thereof matches the target value by controlling the operating speed of the heating medium pump 15 based on a deviation between the circulation flow rate of the heating medium detected by the flow rate sensor 27 and the target value.

Typically, in the indoor-heating operation, it is desirable to fix the circulation flow rate of the heating medium to a substantially constant value. According to the present embodiment, the pump control section 104 performs the above control, and it is thereby possible to fix the circulation flow rate of the heating medium to the substantially constant value.

In the indoor-heating operation, instead of fixing the circulation flow rate of the heating medium to the substantially constant value, the operating speed of the heating medium pump 15 may also be fixed to a substantially constant value. In this case, the pump control section 104 controls the operation of the heating medium pump 15 such that the operating speed of the heating medium pump 15 matches a target value. In the following description, a description will be given of the case where the pump control section 104 includes the function of controlling the circulation flow rate of the heating medium such that the circulation flow rate thereof matches the target value. However, in the present invention, instead of the above function, the pump control section 104 may include a function of controlling the operating speed of the heating medium pump 15 such that the operating speed thereof matches the target value.

The pump control section 104 in Example 1 further includes a function of controlling the operation of the heating medium pump 15 such that the heating medium supply temperature matches the target temperature. The pump control section 104 is capable of controlling the heating medium supply temperature such that the heating medium supply temperature matches the target temperature by controlling the operating speed of the heating medium pump 15 based on the deviation between the heating medium supply temperature detected by the main heat source outlet temperature sensor 24 or the auxiliary heat source outlet temperature sensor 25 and the target temperature.

The pump control section 104 in Example 1 is capable of switching between a first function of controlling the operation of the heating medium pump 15 such that the circulation flow rate of the heating medium matches the target value and a second function of controlling the operation of the heating medium pump 15 such that the heating medium supply temperature matches the target temperature.

The auxiliary heat source operation determination section 103 determines whether the operation of the auxiliary heat source 12 is necessary. For example, when a state in which the heating medium supply temperature detected by the main heat source outlet temperature sensor 24 or the auxiliary heat source outlet temperature sensor 25 is lower than the target temperature continues for a time period longer than a predetermined time period, the auxiliary heat source operation determination section 103 may determine the activation of the auxiliary heat source 12. When a state in which the operating frequency of the compressor 7 is not less than a predetermined value and the heating medium supply temperature is lower than the target temperature continues for a time period longer than a predetermined time period, the auxiliary heat source operation determination section 103 may determine the activation of the auxiliary heat source 12. When a state in which the circulation flow rate of the heating medium is not more than a predetermined value and the heating medium supply temperature is lower than the target temperature continues for a time period longer than a predetermined time period, the auxiliary heat source operation determination section 103 may determine the activation of the auxiliary heat source 12. When a state in which the detected temperature of the room temperature sensor 28 is lower than the target room temperature continues for a time period longer than a predetermined time period during the indoor-heating operation, the auxiliary heat source operation determination section 103 may determine the activation of the auxiliary heat source 12.

«Characteristic operation of Example 1»

Hereinbelow, the characteristic operation of Example 1 will be described. At the initial stage of the start of the indoor-heating operation, it is desired to quickly increase the heating medium supply temperature to the indoor-heating appliance 21. At the initial stage of the start of the indoor-heating operation, as control for quickly increasing the heating medium supply temperature to the indoor-heating appliance 21, the controller 100 may execute at least one of correction that increases the heating power of the main heat source 6 and correction that reduces the circulation flow rate of the heating medium. By quickly increasing the heating medium supply temperature to the indoor-heating appliance 21 at the initial stage of the start of the indoor-heating operation, a part having a large temperature gradient along a longitudinal direction of the circuit is generated in the heating medium in the circuit. The heating medium in the part having the large temperature gradient passes through the indoor-heating appliance 21 and returns to the main heat source 6. At this point, the temperature of the heating medium flowing into the main heat source 6 rapidly rises. When the temperature of the heating medium flowing into the main heat source 6 rapidly rises, there are cases where the adjustment of the heating power of the main heat source 6 by the main heat source capacity control section 102 cannot catch up with the rise. In these cases, there is a possibility that the main heat source outlet temperature rapidly rises. In the case where the main heat source outlet temperature rapidly rises, there is a possibility that the heating medium supply temperature significantly overshoots the target temperature. According to Example 1, it becomes possible to reliably prevent such overshooting of the heating medium supply temperature.

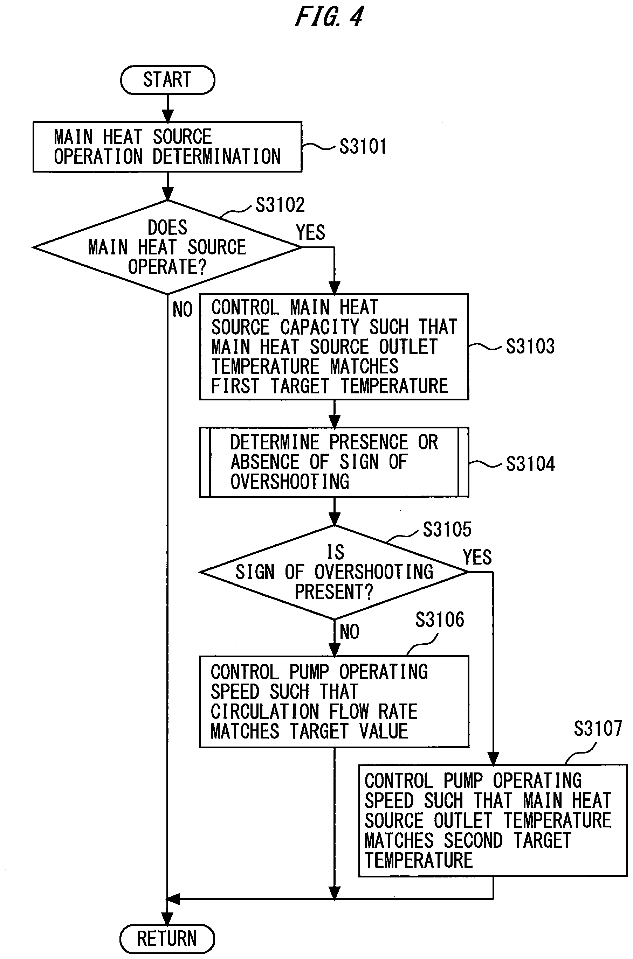

Fig. 4 is a flowchart of a routine executed by the controller 100 of the heating medium system 1 of Example 1. The controller 100 repeatedly executes the present routine periodically. In Step S3101 in Fig. 4, the main heat source operation determination section 101 determines whether the operation of the main heat source 6 is necessary. In the case where the operation of the main heat source 6 is necessary and the main heat source 6 does not operate, the main heat source operation determination section 101 activates the main heat source 6. Examples of the case where the operation of the main heat source 6 is necessary include the case where the user starts the operation using the remote control 200, and the case where the difference between the target room temperature and the detected temperature of the room temperature sensor 28 is large. The routine transitions from Step S3101 to Step S3102. In Step S3102, the controller 100 determines whether the main heat source 6 operates. In the case where the main heat source 6 does not operate, after Step S3102, the routine is ended.

In the case where the main heat source 6 operates, the routine transitions from Step S3102 to Step S3103. In Step S3103, the controller 100 (the main heat source capacity control section 102) controls the heating power of the main heat source 6 such that the main heat source outlet temperature (heating medium supply temperature) detected by the main heat source outlet temperature sensor 24 matches a first target temperature. The first target temperature is a temperature set by the user or a temperature calculated by the controller 100. The first target temperature is, e.g., 50°C.

The routine transitions from Step S3103 to Step S3104. In Step S3104, the controller 100 (the sign determination section 105) performs a process of determining the presence or absence of the sign of overshooting of the heating medium supply temperature. The details of the process will be described later. It is assumed that the "overshooting" means that, e.g., the heating medium supply temperature becomes equal to or higher than a temperature obtained by adding a predetermined first permissible excess temperature to the first target temperature. For example, in the case where the first target temperature is 50°C and the first permissible excess temperature is 3°C, the "overshooting" corresponds to a heating medium supply temperature at 53°C or higher.

The routine transitions from Step S3104 to Step S3105. In Step S3105, the determination result in Step S3104 is checked. In the case where the determination result that the sign of the overshooting of the heating medium supply temperature is not present is obtained, the routine transitions from Step S3105 to Step S3106. In Step S3106, the controller 100 (the pump control section 104) controls the operating speed of the heating medium pump 15 such that the circulation flow rate of the heating medium matches the target value. After Step S3106, the routine is ended.

Note that it is desirable to determine the target value of the circulation flow rate of the heating medium as a value that allows a high-efficiency operation of the heat pump of the main heat source 6. When the circulation flow rate of the heating medium is reduced under a condition that the same heating power is achieved in the indoor-heating appliance 21, the main heat source outlet temperature rises, and the main heat source inlet temperature falls. In general, the inlet temperature has a larger influence on the efficiency of the heat pump. For the high-efficiency operation of the heat pump of the main heat source 6, it is desirable to set the circulation flow rate of the heating medium to a low flow rate. This characteristic becomes conspicuous particularly in the case where the refrigerant of the heat pump is $CO_2$. Note that the reduction of the main heat source inlet temperature when the circulation flow rate of the heating medium is reduced gradually slows down. Accordingly, the circulation flow rate of the heating medium has the optimum value.

In the case where the determination result that the sign of the overshooting of the heating medium supply temperature is present is obtained in Step S3105, the routine transitions to Step S3107. In Step S3107, the controller 100 (the pump control section 104) controls the operating speed of the heating medium pump 15 such that the main heat source outlet temperature (heating medium supply temperature) detected by the main heat source outlet temperature sensor 24 matches a second target temperature. After Step S3107, the routine is ended. The second target temperature is a temperature higher than the first target temperature. For example, the second target temperature can be determined as a temperature obtained by adding a second permissible excess temperature lower than the first permissible excess temperature to the first target temperature. For example, in the case where it is assumed that the first target temperature is 50°C and the second permissible excess temperature is 1°C, the second target temperature can be determined to be 51°C.

Hereinbelow, a description will be given of an example of a method for determining the presence or absence of the sign of the overshooting of the heating medium supply temperature by the controller 100 (the sign determination section 105). In Step S3104 described above, it is possible to determine the presence or absence of the overshooting of the heating medium supply temperature by, e.g., any of methods in the following examples.

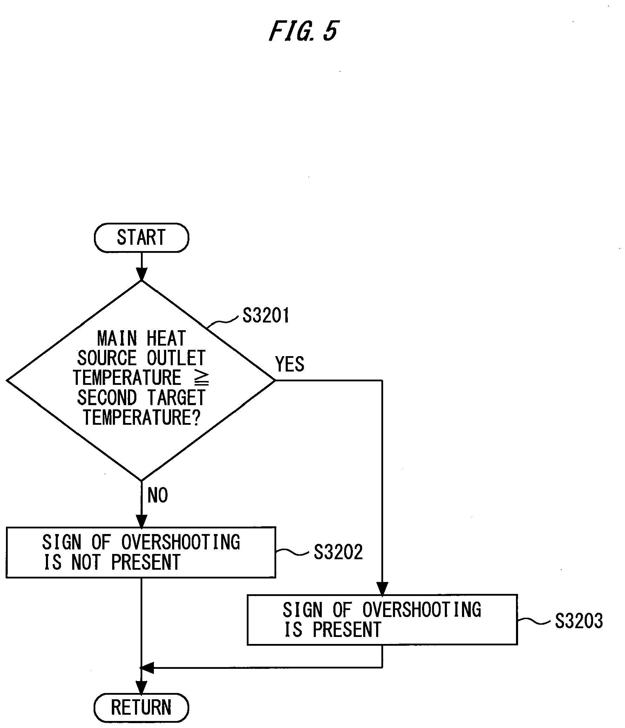

Fig. 5 is a flowchart showing a first example of the method for determining the presence or absence of the sign of the overshooting of the heating medium supply temperature. In Step S3201 in Fig. 5, the controller 100 (the sign determination section 105) compares the main heat source outlet temperature (heating medium supply temperature) detected by the main heat source outlet temperature sensor 24 with the second target temperature. In the case where the main heat source outlet temperature (heating medium supply temperature) detected by the main heat source outlet temperature sensor 24 is lower than the second target temperature, the routine transitions from Step S3201 to Step S3202. In Step S3202, the controller 100 (the sign determination section 105) determines that the sign of the overshooting of the heating medium supply temperature is not present. In contrast to this, in the case where the main heat source outlet temperature (heating medium supply temperature) detected by the main heat source outlet temperature sensor 24 is not less than the second target temperature, the routine transitions from Step S3201 to Step S3203. In Step S3203, the controller 100 (the sign determination section 105) determines that the sign of the overshooting of the heating medium supply temperature is present. Thus, in the first example, by comparing the main heat source outlet temperature (heating medium supply temperature) detected by the main heat source outlet temperature sensor 24 with the second target temperature, it is possible to determine the presence or absence of the sign of the overshooting of the heating medium supply temperature with high accuracy.

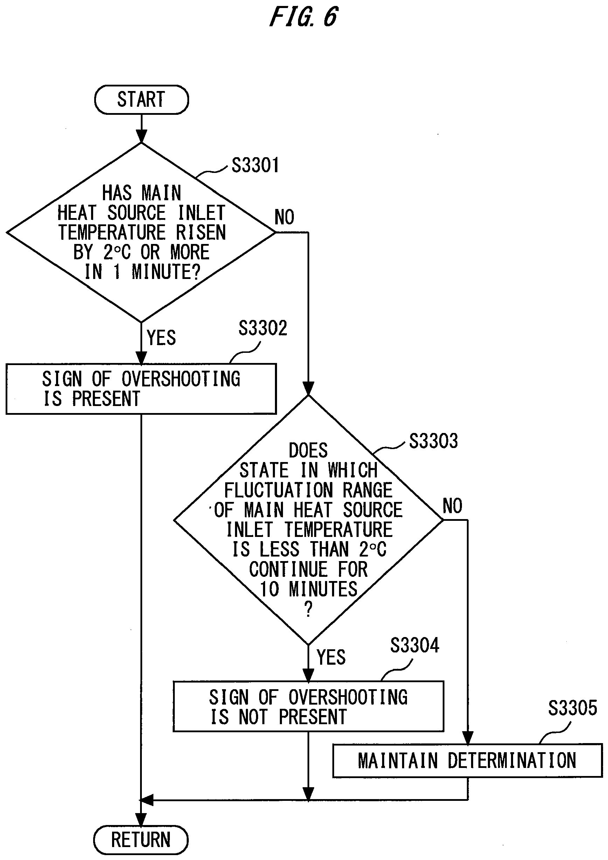

Fig. 6 is a flowchart showing a second example of the method for determining the presence or absence of the sign of the overshooting of the heating medium supply temperature. In Step S3301 in Fig. 6, the controller 100 (the sign determination section 105) determines whether the main heat source inlet temperature (return temperature) detected by the main heat source inlet temperature sensor 26 has risen significantly in a short time. For example, in the case the main heat source inlet temperature (return temperature) detected by the main heat source inlet temperature sensor 26 has risen by 2°C or more in 1 minute, it is determined that the main heat source inlet temperature has risen significantly in a short time.

In the case where it is determined that the main heat source inlet temperature (return temperature) detected by the main heat source inlet temperature sensor 26 has risen significantly in a short time, the routine transitions from Step S3301 to Step S3302. In Step S3302, the controller 100 (the sign determination section 105) determines that the sign of the overshooting of the heating medium supply temperature is present.

In contrast to this, in the case where it is determined that the main heat source inlet temperature (return temperature) detected by the main heat source inlet temperature sensor 26 has not risen significantly in a short time, the routine transitions from Step S3301 to Step S3303. In Step S3303, the controller 100 (the sign determination section 105) determines whether a state in which the fluctuation of the main heat source inlet temperature (return temperature) detected by the main heat source inlet temperature sensor 26 is small continues for a long time period. For example, in the case where a state in which the fluctuation range of the main heat source inlet temperature (return temperature) detected by the main heat source inlet temperature sensor 26 is less than 2°C continues for 10 minutes, it is determined that the state in which the fluctuation of the main heat source inlet temperature (return temperature) detected by the main heat source inlet temperature sensor 26 is small continues for a long time period.

In the case where it is determined that the state in which the fluctuation of the main heat source inlet temperature (return temperature) detected by the main heat source inlet temperature sensor 26 is small continues for a long time period, the routine transitions from Step S3303 to Step S3304. In Step S3304, the controller 100 (the sign determination section 105) determines that the sign of the overshooting of the heating medium supply temperature is not present.

In contrast to this, in the case where it is determined that the state in which the fluctuation of the main heat source inlet temperature (return temperature) detected by the main heat source inlet temperature sensor 26 is small does not continue for a long time period, the routine transitions from Step S3303 to Step S3305. In Step S3305, the controller 100 (the sign determination section 105) maintains the current determination state concerning the presence or absence of the sign of the overshooting of the heating medium supply temperature. That is, in the case where it is determined that the sign of the overshooting of the heating medium supply temperature is present in the previous determination, the determination is maintained and, in the case where it is determined that the sign of the overshooting of the heating medium supply temperature is not present in the previous determination, the determination is maintained.

In the second example described above, it is possible to determine the presence or absence of the sign of the overshooting of the heating medium supply temperature with high accuracy based on the change of the main heat source inlet temperature (return temperature) detected by the main heat source inlet temperature sensor 26.

According to Example 1, in the case where the part having the large temperature gradient along the longitudinal direction of the circuit is generated in the heating medium in the circuit and the heating medium in the part having the large temperature gradient passes through the indoor-heating appliance 21 and returns to the main heat source 6, it is possible to determine that the sign of the overshooting of the heating medium supply temperature is present. According to the present embodiment, in the case where it is determined that the sign of the overshooting of the heating medium supply temperature is present, the controller 100 (the pump control section 104) controls the operating speed of the heating medium pump 15 such that the main heat source outlet temperature (heating medium supply temperature) detected by the main heat source outlet temperature sensor 24 matches the second target temperature in Step S3107. As a result, it is possible to reliably prevent significant overshooting of the heating medium supply temperature.

According to Example 1, by setting the second target temperature to the temperature higher than the first target temperature, the following effects are obtained. In the case where the operating speed of the heating medium pump 15 is controlled such that the main heat source outlet temperature (heating medium supply temperature) detected by the main heat source outlet temperature sensor 24 matches the second target temperature in Step S3107, it is possible to reliably prevent the main heat source outlet temperature (heating medium supply temperature) detected by the main heat source outlet temperature sensor 24 from becoming lower than the first target temperature. Accordingly, when the heating power of the main heat source 6 is controlled such that the main heat source outlet temperature (heating medium supply temperature) detected by the main heat source outlet temperature sensor 24 matches the first target temperature in Step S3103, the correction in which the heating power of the main heat source 6 is corrected so as to be reduced is continued. Therefore, it is possible to prevent the significant overshooting of the heating medium supply temperature more reliably. Thereafter, in the end, the heating medium supply temperature becomes gradually close to the first target temperature, and it is possible to return to the control in which the circulation flow rate of the heating medium is caused to converge to the target value (Step S3106).

Example 1 has described the example in which the heating medium system 1 includes the auxiliary heat source 12 (second heating device). Example 1 can also be applied to the heating medium system that does not include the auxiliary heat source 12 (second heating device).

Example 2

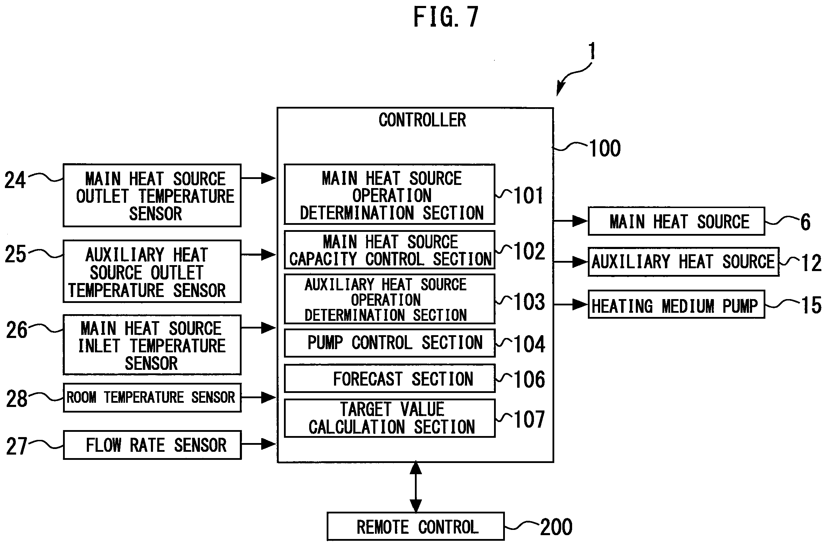

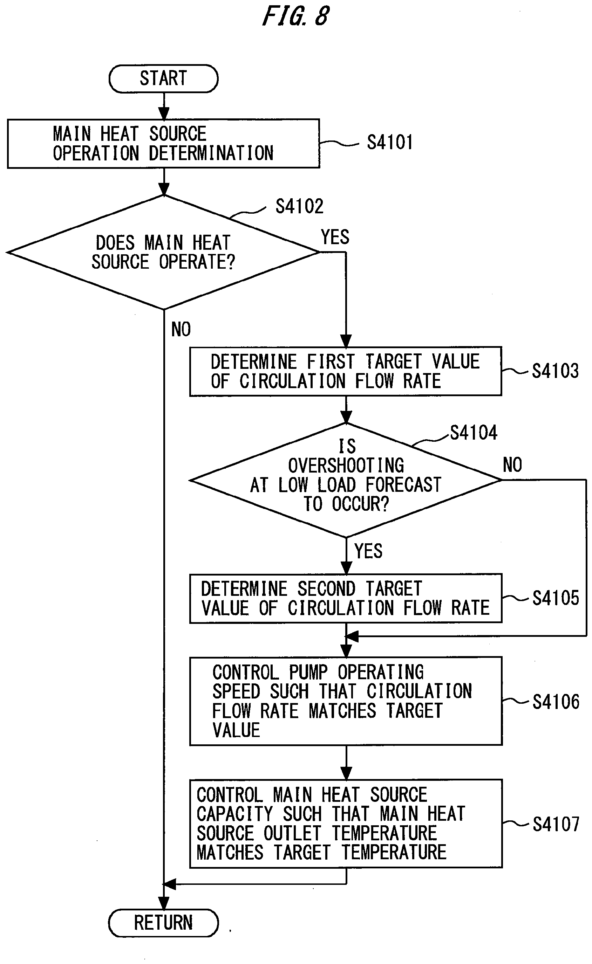

Next, Example 2 will be described with reference to Fig. 7 and Fig. 8. Points different from the above-described embodiment will be mainly described, and the same or equivalent portions are designated by the same reference numerals and the description thereof will be omitted. A heating medium system 1 of Example 2 includes the same configuration as that of the heating medium system 1 of Example 1 shown in Fig. 1. Fig. 7 is a block diagram of the heating medium system 1 of Example 2.

In the indoor-heating operation having a low load, even when the heating power of the main heat source 6 is reduced to the lower limit, there is a possibility that the main heat source outlet temperature (heating medium supply temperature) overshoots the target temperature. According to Example 2, it is possible to reliably prevent the overshooting of the heating medium supply temperature in such a case.

As described in Example 1, for the high-efficiency operation of the heat pump of the main heat source 6, it is advantageous to set the circulation flow rate of the heating medium to the low flow rate. Accordingly, in the heating medium system 1, the target value of the circulation flow rate of the heating medium is typically set to the low flow rate (e.g., 3.0 L/min).

However, in the indoor-heating operation having the low load performed in intermediate seasons (spring, autumn), even when the target room temperature set by the user is the same, the target temperature of the main heat source outlet temperature (heating medium supply temperature) calculated by the controller 100 is lower than that in winter. In this case, the difference between the main heat source outlet temperature (heating medium supply temperature) and the main heat source inlet temperature (return temperature) is reduced. For example, in winter, each of the main heat source outlet temperature (heating medium supply temperature) and its target temperature is about 50°C, and the main heat source inlet temperature (return temperature) is about 30°C. In contrast to this, in the intermediate season, each of the main heat source outlet temperature (heating medium supply temperature) and its target temperature is about 35°C, and the main heat source inlet temperature (return temperature) is about 25°C. In this specific example, when it is assumed that both of the circulation flow rates of the heating medium are equally 3.0 L/min, the appropriate value of the heating power of the main heat source 6 is 4.2 kW in winter and is 2.1 kW in the intermediate season. In the intermediate season, even when the compressor 7 of the main heat source 6 is operated at the minimum frequency, a situation occurs in which the heating power of the main heat source 6 becomes higher than the above appropriate value (e.g., 2.1 kW) depending on outside air temperature and the like. In such a situation, the overshooting of the main heat source outlet temperature (heating medium supply temperature) occurs. In the above specific example, when the compressor 7 of the main heat source 6 is operated at the minimum frequency, i.e., in the case where the lower limit of the heating power of the main heat source 6 is 3.0 kW, when the operation is performed with the circulation flow rate of the heating medium of 3.0 L/min, the difference between the main heat source outlet temperature (heating medium supply temperature) and the main heat source inlet temperature (return temperature) is 14°C. In the case of the specific example, when it is assumed that the main heat source inlet temperature (return temperature) is 25°C, the main heat source outlet temperature (heating medium supply temperature) is 39°C, and hence the overshooting of 4°C relative to the target temperature (35°C) of the main heat source outlet temperature (heating medium supply temperature) in the intermediate season occurs. Hereinafter, the overshooting of the heating medium supply temperature described above is referred to as "overshooting at low load". When the overshooting at low load occurs, the main heat source 6 may be operated and stopped repeatedly, and hence it is feared that the life of the main heat source 6 deteriorates. According to Example 2, it is possible to reliably prevent the occurrence of the overshooting at low load.

The heating power of the main heat source 6 changes according to the outside air temperature and the operating frequency of the compressor 7. The controller 100 in Example 2 stores, in advance, the relationship among the outside air temperature, the operating frequency of the compressor 7, and the heating power of the main heat source 6. The controller 100 in Example 2 is capable of calculating the heating power of the main heat source 6 by applying the outside air temperature and the operating frequency of the compressor 7 to the relationship. Information on the outside air temperature may be detected using an outside air temperature sensor (not shown), or may also be acquired through communication from external equipment. In addition, as shown in Fig. 7, unlike the controller 100 in Example 1, the controller 100 in Example 2 includes, instead of the sign determination section 105, a forecast section 106 that forecasts the occurrence of the overshooting at low load, and a target value calculation section 107.

Fig. 8 is a flowchart of a routine executed by the controller 100 of the heating medium system 1 of the present embodiment. The controller 100 repeatedly executes the present routine periodically. In Step S4101 in Fig. 8, the main heat source operation determination section 101 determines whether the operation of the main heat source 6 is necessary. In the case where the operation of the main heat source 6 is necessary and the main heat source 6 does not operate, the main heat source operation determination section 101 activates the main heat source 6. The routine transitions from Step S4101 to Step S4102. In Step S4102, the controller 100 determines whether the main heat source 6 operates. In the case where the main heat source 6 does not operate, after Step S4102, the routine is ended.

In the case where the main heat source 6 operates, the routine transitions from Step S4102 to Step S4103. In Step S4103, the controller 100 (the target value calculation section 107) determines a first target value of the circulation flow rate of the heating medium. The first target value is determined as the value of a low flow rate (e.g., 3.0 L/min) that allows the high-efficiency operation of the heat pump of the main heat source 6. The routine transitions from Step S4103 to Step S4104.

In Step S4104, the controller 100 (the forecast section 106) forecasts whether the overshooting of the main heat source outlet temperature (heating medium supply temperature) will occur under a condition in which it is assumed that the heating power of the main heat source 6 is reduced to the lower limit and the circulation flow rate of the heating medium matches the first target value. That is, in Step S4104, the controller 100 (the forecast section 106) forecasts whether the overshooting at low load will occur.

Hereinbelow, a description will be given of an example of a method in which the controller 100 (the forecast section 106) forecasts whether the overshooting at low load will occur in Step S4104.

(Example 1) The main heat source outlet temperature (heating medium supply temperature) detected by the main heat source outlet temperature sensor 24 is monitored. When the heating power of the main heat source 6 is reduced to the lower limit (the compressor 7 is operated at the minimum frequency), in the case where a value obtained by subtracting the target temperature from the main heat source outlet temperature (heating medium supply temperature) detected by the main heat source outlet temperature sensor 24 reaches an excess temperature (e.g., 1°C) smaller in range than a significant excess temperature (e.g., 3°C) to be avoided, it is possible to forecast that the overshooting at low load will occur. Otherwise, it is possible to forecast that the overshooting at low load will not occur.

(Example 2) In a state in which the main heat source outlet temperature (heating medium supply temperature) detected by the main heat source outlet temperature sensor 24 is in the vicinity of the target temperature (e.g., a range in which the difference therebetween is 5°C or less), in the case where the main heat source outlet temperature (heating medium supply temperature) detected by the main heat source outlet temperature sensor 24 has risen significantly in a short time (e.g., in the case where the main heat source outlet temperature has risen by 2°C or more in 1 minute), it is possible to forecast that the shooting at low load will occur. Otherwise, it is possible to forecast that the overshooting at low load will not occur.

In the case where it is forecast that the overshooting at low load will not occur in Step S4104, the routine transitions to Step S4106. In Step S4106, the controller 100 (the pump control section 104) controls the operating speed of the heating medium pump 15 such that the circulation flow rate of the heating medium matches the target value. In the case where it is forecast that the overshooting at low load will not occur in Step S4104, the operating speed of the heating medium pump 15 is controlled in Step S4106 such that the circulation flow rate of the heating medium matches the first target value determined in Step S4103. In this case, the circulation flow rate of the heating medium is controlled to the first target value as the low flow rate, and the high-efficiency operation of the heat pump of the main heat source 6 is thereby achieved.

In contrast to this, in the case where it is forecast that the overshooting at low load will occur in Step S4104, the routine transitions to Step S4105. In Step S4105, the controller 100 (the target value calculation section 107) determines a second target value of the circulation flow rate of the heating medium. The second target value is a value larger than the first target value. The controller 100 (the target value calculation section 107) calculates the second target value such that the second target value does not allow the main heat source outlet temperature (heating medium supply temperature) to overshoot the target temperature in a state in which the heating power of the main heat source 6 is reduced to the lower limit (a state in which the compressor 7 is operated at the minimum frequency). In the case of the specific example described above, by setting the circulation flow rate of the heating medium to 4.3 L/min, the main heat source outlet temperature (heating medium supply temperature) when the heating power of the main heat source 6 is reduced to the lower limit (3.0 kW) can be controlled to the target temperature (35°C). In the case of this specific example, the controller 100 (the target value calculation section 107) determines that the second target value of the circulation flow rate of the heating medium is 4.3 L/min (or a value of not less than 4.3 L/min). The routine transitions from Step S4105 to Step S4106.

In the case where it is forecast that the overshooting at low load will occur in Step S4104, the operating speed of the heating medium pump 15 is controlled in Step S4106 such that the circulation flow rate of the heating medium matches the second target value determined in Step S4105. With this, the circulation flow rate of the heating medium is controlled to the second target value larger than the first target value, and it is thereby possible to reliably prevent the occurrence of the overshooting at low load.

The routine transitions from Step S4106 to Step S4107. In Step S4107, the controller 100 (the main heat source capacity control section 102) controls the heating power of the main heat source 6 such that the main heat source outlet temperature (heating medium supply temperature) detected by the main heat source outlet temperature sensor 24 matches the target temperature. After Step S4107, the routine is ended.

As described thus far, according to the present embodiment, in the case where it is forecast that the overshooting at low load will occur, by changing the target value of the circulation flow rate of the heating medium from the first target value to the second target value, it is possible to reliably prevent the occurrence of the overshooting at low load.

(Modification)

Next, a modification will be described. In the routine in Fig. 8, the controller 100 (the forecast section 106) performs the process of forecasting whether the overshooting at low load will occur during the operation of the main heat source 6 (heating device). In contrast to this, in the present modification, the process of forecasting whether the overshooting at low load will occur is performed while the main heat source 6 is stopped or when the main heat source 6 is activated. In the present modification, in the case where it is forecast that the overshooting at low load will occur, the controller 100 (the pump control section 104) sets the target value of the circulation flow rate of the heating medium to the second target value from the beginning of the activation of the main heat source 6. According to the present modification, it is possible to avert changing of the target value of the circulation flow rate of the heating medium (changing from the first target value to the second target value) during the operation of the main heat source 6. Accordingly, it becomes possible to further stabilize the operation state of the heating medium system 1 to further increase the reliability of the heating medium system 1.

Hereinbelow, a description will be given of an example of a method in which the controller 100 (the forecast section 106) forecasts whether the overshooting at low load will occur while the main heat source 6 is stopped or when the main heat source 6 is activated.

$$\text{lower limit heating power [kW] of main heat source 6} > \text{target circulation flow rate [L/min]} \times$$
$$\{(\text{target temperature of main heat source outlet temperature} + \text{permissible excess temperature}) - \text{main heat source inlet temperature}\} \times \text{density of heating medium} \times \text{specific heat of heating medium} \times \text{unit conversion factor} \dots (1)$$

In the case where the above inequality (1) holds when the first target value is substituted for the target circulation flow rate in the above inequality (1), it is possible to forecast that the overshooting at low load will occur. In this case, a value that does not allow the above inequality (1) to hold when the value is substituted for the target circulation flow rate in the above inequality (1) may be determined as the second target value.

In the case of the calculation of the above inequality (1), respective values may be estimated, e.g., in the following manner. The lower limit heating power [kW] of the main heat source 6 may be estimated based on the outside air temperature and the minimum frequency of the compressor 7. The main heat source inlet temperature may be estimated based on an actual value in a past predetermined time period. Alternatively, the main heat source inlet temperature may be estimated as a value obtained by adding a predetermined temperature difference that considers the design value of heat transfer performance of the indoor-heating appliance 21 (a value obtained by dividing an assumed indoor-heating load (e.g., 3.0 kW) by designed heat transfer performance (e.g., 300 W/k)) to the target room temperature set by the user. The outside air temperature may be estimated based on an actual value in a past predetermined time period. Alternatively, the outside air temperature may be calculated by using the value of the outside air temperature (e.g., 16°C) serving as a condition with which the overshooting at low load is most likely to occur.

Hereinbelow, a description will be given of a specific example of the calculation of the above inequality (1). In the case where the main heat source inlet temperature is estimated to be 35°C, each of the main heat source outlet temperature and its target temperature is estimated to be 45°C, and the outside air temperature is estimated to be 16°C, the lower limit heating power of the main heat source 6 is estimated to be 3.0 kW. The permissible excess temperature is assumed to be 3°C. In this case, when 3.0 L/min (first target value) is substituted for the target circulation flow rate in the above inequality (1), the above inequality (1) holds, and hence it is possible to forecast that the overshooting at low load will occur. In this case, when 3.3 L/min is substituted for the target circulation flow rate in the above inequality (1), the above inequality (1) does not hold. Therefore, a value of 3.3 L/min or not less than 3.3 L/min may be determined as the second target value.

Example 2 has described the example in which the heating medium system 1 includes the auxiliary heat source 12 (second heating device). Example 2 can also be applied to the heating medium system that does not include the auxiliary heat source 12 (second heating device).

Example 3

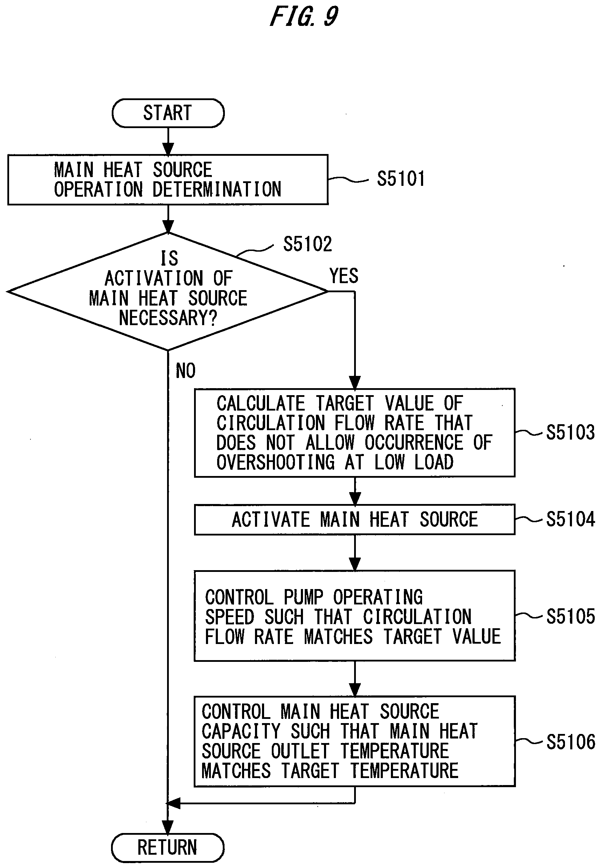

Next, Example 3 will be described with reference to Fig. 9. Points different from the above-described embodiments will be mainly described, and the same or equivalent portions are designated by the same reference numerals and the description thereof will be omitted. A heating medium system 1 of Example 3 includes the same configuration as that of the heating medium system 1 of Example 1 shown in Fig. 1. The block diagram of the heating medium system 1 of Example 3 is the same as that (Fig. 7) of Example 2 described above except that the forecast section 106 is not provided, and hence the block diagram thereof will be omitted.

A main object of Example 3 is the same as that of Example 2. That is, an object of Example 3 is to reliably prevent the occurrence of the overshooting at low load. In the following description, points different from Example 2 will be mainly described, and the description of the same points as those of Example 2 will be simplified or omitted.

In Example 3, the controller 100 (the target value calculation section 107) has a function of calculating the target value of the circulation flow rate of the heating medium that does not allow the occurrence of the overshooting at low load. The controller 100 (the target value calculation section 107) executes the calculation of the target value while the main heat source 6 is stopped or when the main heat source 6 is activated. The controller 100 (the pump control section 104) controls the circulation flow rate of the heating medium based on the target value from the beginning of the activation of the main heat source 6. According to Example 3, by having the above arrangement, it is possible to reliably prevent the occurrence of the overshooting at low load after the activation of the main heat source 6.

Fig. 9 is a flowchart of a routine executed by the controller 100 of the heating medium system 1 of Example 3. In Step S5101 in Fig. 9, the main heat source operation determination section 101 determines whether the operation of the main heat source 6 is necessary. The routine transitions from Step S5101 to Step S5102. In Step S5102, the controller 100 determines whether the activation of the main heat source 6 is necessary based on the determination result by the main heat source operation determination section 101. In the case where the activation of the main heat source 6 is not necessary, after Step S5102, the routine is ended. In the case where the activation of the main heat source 6 is necessary, the routine transitions from Step S5102 to Step S5103.

In Step S5103, the controller 100 (the target value calculation section 107) calculates the target value of the circulation flow rate of the heating medium that does not allow the occurrence of the overshooting at low load. For example, the controller 100 (the target value calculation section 107) can calculate the target value by calculating the target circulation flow rate [L/min] such that the inequality (1) described in Example 2 does not hold. Each term in the inequality (1) can be estimated by the method described in Example 2.

The routine transitions from Step S5103 to Step S5104. In Step S5104, the controller 100 activates the main heat source 6. In the present flowchart, the target value of the circulation flow rate of the heating medium is calculated while the main heat source 6 is stopped before the main heat source 6 is activated (Step S5103). However, the target value of the circulation flow rate of the heating medium may be calculated in parallel with or immediately after the activation of the main heat source 6.

The routine transitions from Step S5104 to Step S5105. In Step S5105, the controller 100 (the pump control section 104) controls the operating speed of the heating medium pump 15 such that the circulation flow rate of the heating medium matches the target value calculated in Step S5103. The routine transitions from Step S5105 to Step S5106. In Step S5106, the controller 100 (the main heat source capacity control section 102) controls the heating power of the main heat source 6 such that the main heat source outlet temperature (heating medium supply temperature) detected by the main heat source outlet temperature sensor 24 matches the target temperature. After Step S5106, the routine is ended.

As described thus far, according to the present embodiment, it is possible to reliably prevent the occurrence of the overshooting at low load after the activation of the main heat source 6 by executing the calculation of the target value of the circulation flow rate of the heating medium that does not allow the occurrence of the overshooting at low load while the main heat source 6 is stopped or when the main heat source 6 is activated. In addition, according to the present embodiment, it is possible to prevent the changing of the target value of the circulation flow rate of the heating medium after the activation of the main heat source 6. Accordingly, it becomes possible to further stabilize the operation state of the heating medium system 1 to further increase the reliability of the heating medium system 1. Note that Example 3 can be applied to the heating medium system that does not include the auxiliary heat source 12 (second heating device).

Embodiment of the invention

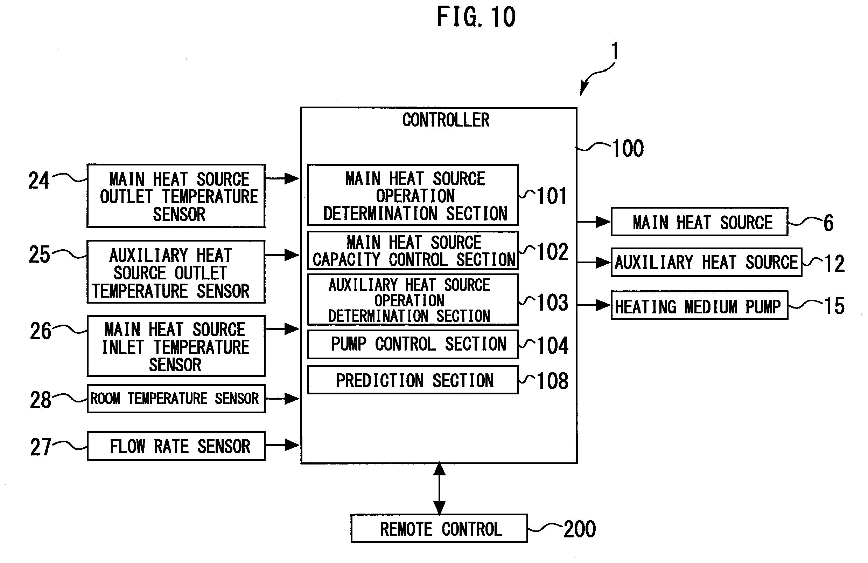

Next, an embodiment of the present invention will be described with reference to Fig. 10 to Fig. 13. Points different from the above-described examples will be mainly described, and the same or equivalent portions are designated by the same reference numerals and the description thereof will be omitted. A heating medium system 1 of an embodiment of the invention includes the same configuration as that of the heating medium system 1 of Example 1 shown in Fig. 1. Fig. 10 is a block diagram of the heating medium system 1 of an embodiment of the invention.

In the case where the auxiliary heat source 12 (second heating device) is activated during the operation of the main heat source 6 (first heating device), there is a possibility that the auxiliary heat source outlet temperature (heating medium supply temperature) overshoots the target temperature. According to an embodiment of the invention, it is possible to reliably prevent the overshooting of the heating medium supply temperature in such a case.

As described in Example 1, for the high-efficiency operation of the heat pump of the main heat source 6, it is advantageous to set the circulation flow rate of the heating medium to the low flow rate. Accordingly, in the heating medium system 1, the target value of the circulation flow rate of the heating medium is typically set to the low flow rate (e.g., 3.0 L/min).

In the case where the heating power of the main heat source 6 is insufficient relative to a thermal load (e.g., in the case where a state in which the main heat source outlet temperature does not reach the target temperature continues), the auxiliary heat source 12 is activated. The heating power of the auxiliary heat source 12 may be variable or may also be fixed. For example, in the case where a state in which the main heat source outlet temperature is lower than the target temperature by 5°C or more continues for 10 minutes or more, the controller 100 (the auxiliary heat source operation determination section 103) activates the auxiliary heat source 12. In the case where the auxiliary heat source 12 is activated in this state, there is a possibility that the auxiliary heat source outlet temperature (heating medium supply temperature) overshoots the target temperature. The temperature rise amount of the auxiliary heat source outlet temperature (heating medium supply temperature) by the activation of the auxiliary heat source 12 can be calculated by the following expression.

$$\text{temperature rise amount} = \text{heating power [kW] of auxiliary heat source } 12 \div \text{circulation flow}$$
$$\text{rate [L/min] of heating medium} \div \text{density of heating medium} \div \text{specific heat of heating medium} \times \text{unit}$$
$$\text{conversion factor} \dots (2)$$

As a specific example, in the case where it is assumed that the heating power of the auxiliary heat source 12 is 2.0 kW and the circulation flow rate of the heating medium is 3.0 L/min, the temperature rise amount of the auxiliary heat source outlet temperature (heating medium supply temperature) by the activation of the auxiliary heat source 12 is 9.6°C according to the above expression (2). In this case, when it is assumed that the heating medium supply temperature before the activation of the auxiliary heat source 12 is lower than the target temperature by 5°C, the heating medium supply temperature after the activation of the auxiliary heat source 12 exceeds the target temperature by 4.6°C. Hereinafter, the overshooting of the heating medium supply temperature described above is referred to as "overshooting at the time of activation of the auxiliary heat source". According to an embodiment of the invention, it is possible to reliably prevent the occurrence of the overshooting at the time of activation of the auxiliary heat source.

As shown in Fig. 10, unlike the controller 100 in Example 1, the controller 100 in an embodiment of the invention includes, instead of the sign determination section 105, a prediction section 108 that predicts whether the auxiliary heat source 12 (second heating device) will be activated.

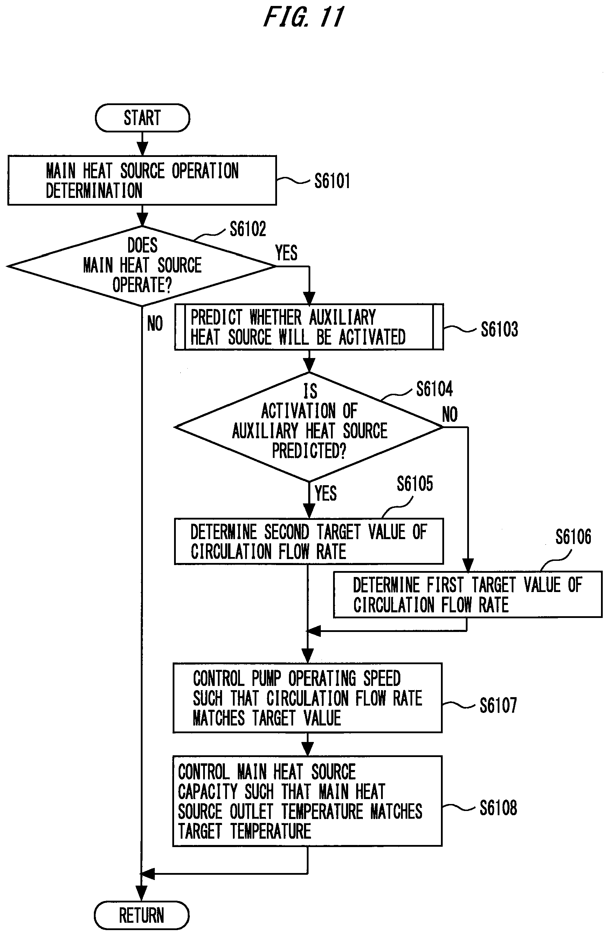

Fig. 11 is a flowchart of a routine executed by the controller 100 of the heating medium system 1 of an embodiment of the invention. The controller 100 repeatedly executes the present routine periodically. In Step S6101 in Fig. 11, the main heat source operation determination section 101 determines whether the operation of the main heat source 6 is necessary. In the case where the operation of the main heat source 6 is necessary and the main heat source 6 does not operate, the main heat source operation determination section 101 activates the main heat source 6. The routine transitions from Step S6101 to Step S6102. In Step S6102, the controller 100 determines whether the main heat source 6 operates. In the case where the main heat source 6 does not operate, after Step S6102, the routine is ended.

In the case where the main heat source 6 operates, the routine transitions from Step S6102 to Step S6103. In Step S6103, the controller 100 (the prediction section 108) predicts whether the auxiliary heat source 12 will be activated. The controller 100 (the prediction section 108) can predict whether the auxiliary heat source 12 will be activated by, e.g., comparing the main heat source outlet temperature detected by the main heat source outlet temperature sensor 24 with the target temperature. The routine transitions from Step S6103 to Step S6104.

In Step S6104, the prediction result in Step S6103 is checked. In the case where it is predicted that the auxiliary heat source 12 will not be activated, the routine transitions from Step S6104 to Step S6106. In Step S6106, the controller 100 determines a first target value of the circulation flow rate of the heating medium. The first target value is determined as the value of the low flow rate (e.g., 3.0 L/min) that allows the high-efficiency operation of the heat pump of the main heat source 6.

In contrast to this, in the case where it is predicted that the auxiliary heat source 12 will be activated in Step S6104, the routine transitions to Step S6105. In Step S6105, the controller 100 determines a second target value of the circulation flow rate of the heating medium. The second target value is a value larger than the first target value. The second target value is determined as a value that does not allow the auxiliary heat source outlet temperature (heating medium supply temperature) to exceed a value obtained by adding the permissible excess temperature to the target temperature in the case where the auxiliary heat source 12 is activated. For example, in the case where it is assumed that the heating power of the auxiliary heat source 12 is 2.0 kW and the circulation flow rate of the heating medium is not less than 5.7 L/min, it can be seen that the temperature rise amount of the auxiliary heat source outlet temperature (heating medium supply temperature) by the activation of the auxiliary heat source 12 is 5°C or less according to the above expression (2). In the case of this specific example, it is possible to reliably prevent the occurrence of the overshooting at the time of activation of the auxiliary heat source by determining that the second target value of the circulation flow rate of the heating medium is 5.7 L/min (or a value of not less than 5.7 L/min).

The routine transitions from Step S6105 or Step S6106 to Step S6107. In Step S6107, the controller 100 (the pump control section 104) controls the operating speed of the heating medium pump 15 such that the circulation flow rate of the heating medium matches the target value. In the case where it is predicted that the auxiliary heat source 12 will not be activated in Step S6104, the operating speed of the heating medium pump 15 is controlled in Step S6107 such that the circulation flow rate of the heating medium matches the first target value determined in Step S6106. In this case, the circulation flow rate of the heating medium is controlled to the first target value as the low flow rate, and the high-efficiency operation of the heat pump of the main heat source 6 is thereby achieved.

In contrast to this, in the case where it is predicted that the auxiliary heat source 12 will be activated in Step S6104, the operating speed of the heating medium pump 15 is controlled in Step S6107 such that the circulation flow rate of the heating medium matches the second target value determined in Step S6105. In this case, the circulation flow rate of the heating medium is controlled to the second target value larger than the first target value, whereby it is possible to reliably prevent the auxiliary heat source outlet temperature (heating medium supply temperature) from overshooting the target temperature even in the case where the auxiliary heat source 12 is activated.

The routine transitions from Step S6107 to Step S6108. In Step S6108, the controller 100 (the main heat source capacity control section 102) controls the heating power of the main heat source 6 such that the main heat source outlet temperature (heating medium supply temperature) detected by the main heat source outlet temperature sensor 24 matches the target temperature. After Step S6108, the routine is ended.

As described thus far, according to the present embodiment, in the case where it is predicted that the auxiliary heat source 12 will be activated, it is possible to reliably prevent the occurrence of the overshooting at the time of activation of the auxiliary heat source by changing the target value of the circulation flow rate of the heating medium from the first target value to the second target value.

(Modification)

Next, a modification will be described. In the routine in Fig. 11, the controller 100 (the forecast section 106) performs the process of predicting whether the auxiliary heat source 12 will be activated during the operation of the main heat source 6 (heating device). In contrast to this, in the present modification, the process of predicting whether the auxiliary heat source 12 will be activated is performed while the main heat source 6 is stopped or when the main heat source 6 is activated. In the present modification, in the case where it is predicted that the auxiliary heat source 12 will be activated, the controller 100 (the pump control section 104) sets the target value of the circulation flow rate of the heating medium to the second target value from the beginning of the activation of the main heat source 6. According to the present modification, it is possible to avert changing of the target value of the circulation flow rate of the heating medium (changing from the first target value to the second target value) during the operation of the main heat source 6. Accordingly, it becomes possible to further stabilize the operation state of the heating medium system 1 to further increase the reliability of the heating medium system 1.

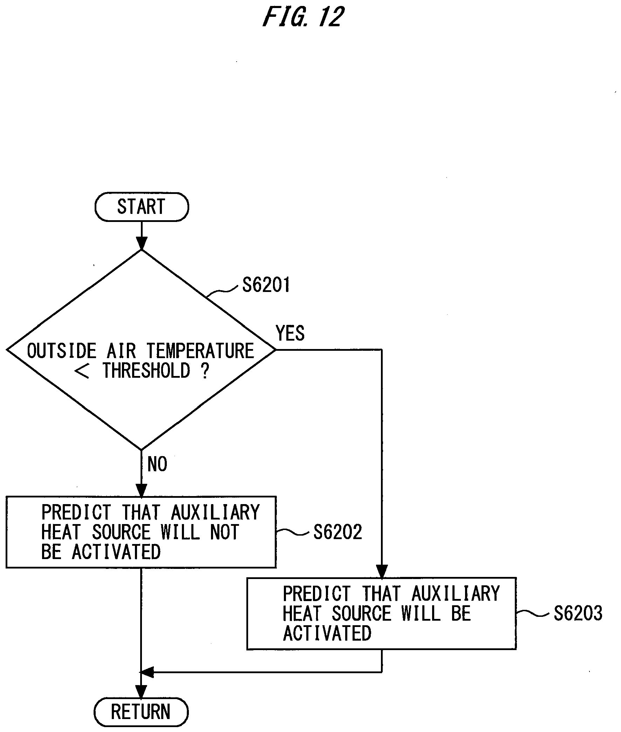

Fig. 12 is a flowchart showing a first example of a method for predicting whether the auxiliary heat source 12 will be activated. In Step S6201 in Fig. 12, the controller 100 (the prediction section 108) compares the outside air temperature with a predetermined threshold value (e.g., minus 3°C). Information on the outside air temperature may be detected using an outside air temperature sensor (not shown), or may also be acquired through communication from external equipment. In the case where the outside air temperature is lower than the threshold value, the routine transitions from Step S6201 to Step S6203. In Step S6203, the controller 100 (the prediction section 108) predicts that the auxiliary heat source 12 will be activated. In contrast to this, in the case where the outside air temperature is not less than the threshold value, the routine transitions from Step S6201 to Step S6202. In Step S6202, the controller 100 (the prediction section 108) predicts that the auxiliary heat source 12 will not be activated. It is possible to predict that, as the outside air temperature is lower, the amount of heat that escapes from the interior of a room to the outside of a building is larger and the indoor-heating load is higher. In the case of the first example described above, by using the information on the outside air temperature, it is possible to predict whether the auxiliary heat source 12 will be activated with high accuracy while the main heat source 6 is stopped or when the main heat source 6 is activated. Note that it is also possible to predict whether the auxiliary heat source 12 will be activated during the operation of the main heat source 6 by the same method as that of the first example described above.

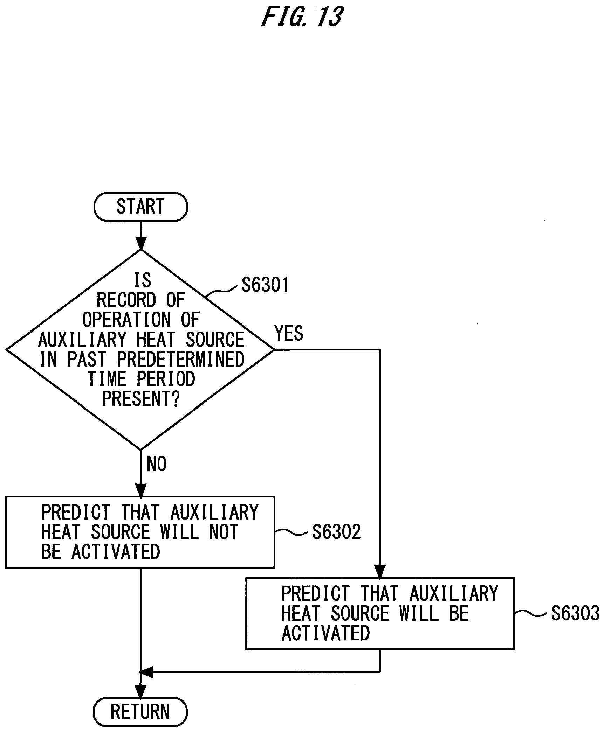

Fig. 13 is a flowchart showing a second example of the method for predicting whether the auxiliary heat source 12 will be activated. In Step S6301 in Fig. 13, the controller 100 (the prediction section 108) determines whether a record of the operation of the auxiliary heat source 12 in a past predetermined time period (e.g., past two weeks) is present. In the case where the record (history) of the operation of the auxiliary heat source 12 in the past predetermined time period is present, the routine transitions from Step S6301 to Step S6303. In Step S6303, the controller 100 (the prediction section 108) predicts that the auxiliary heat source 12 will be activated. In contrast to this, in the case where the record (history) of the operation of the auxiliary heat source 12 in the past predetermined time period is not present, the routine transitions from Step S6301 to Step S6302. In Step S6302, the controller 100 (the prediction section 108) predicts that the auxiliary heat source 12 will not be activated. In the case where the record (history) of the operation of the auxiliary heat source 12 in the past predetermined time period is present, it is possible to presume that it is a season having the high indoor-heating load, and hence it is possible to predict that the auxiliary heat source 12 will be activated. According to the second example described above, by using the information on the operation record of the auxiliary heat source 12 in the past predetermined time period, it is possible to predict whether the auxiliary heat source 12 will be activated with high accuracy while the main heat source 6 is stopped or when the main heat source 6 is activated. Note that it is also possible to predict whether the auxiliary heat source 12 will be activated by using the above first example and the above second example in combination. In addition, it is also possible to predict whether the auxiliary heat source 12 will be activated during the operation of the main heat source 6 by the same method as that of the above second example.

## Claims

1.   A heating medium system (1) comprising:

a pump (15) configured to circulate a heating medium in a circuit;
a first heating device (6) configured to heat the heating medium;
a second heating device (12) configured to heat the heating medium at a position downstream of the first heating device (6) in a case where a heating power of the first heating device (6) is insufficient;
pump control means (104) configured to control an operation of the pump (15) such that a circulation flow rate of the heating medium or an operating speed of the pump (15) matches a target value; and
heating power control means (102) configured to control the heating power of the first heating device (6) such that a heating medium supply temperature, which is a temperature of the heating medium sent to a heat receiving section that receives heat of the heating medium, matches a target temperature;
**characterized in that**
the heating medium system (1) further comprises prediction means (108) configured to predict whether the second heating device (12) will be activated, wherein
the pump control means (104) is configured to:

control the operation of the pump (15) such that the circulation flow rate of the heating medium or the operating speed of the pump (15) matches a first target value in a case where it is predicted that the second heating device (12) will not be activated; and

control the operation of the pump (15) such that the circulation flow rate of the heating medium or the operating speed of the pump (15) matches a second target value larger than the first target value in a case where it is predicted that the second heating device (12) will be activated.

2. The heating medium system (1) according to Claim 1, wherein
the prediction means (108) is configured to predict whether the second heating device (12) will be activated while the first heating device (6) is stopped or when the first heating device (6) is activated.

3. The heating medium system (1) according to Claim 1 or 2, wherein
the prediction means (108) is configured to predict whether the second heating device (12) will be activated based on outside air temperature.

4. The heating medium system (1) according to Claim 1 or 2, wherein
the prediction means (108) is configured to predict whether the second heating device (12) will be activated based on a record of an operation of the second heating device (12) in a past predetermined time period.


**Patentansprüche**

1. Heizmediumsystem (1), umfassend:

eine Pumpe (15), dazu ausgelegt, ein Heizmedium in einem Kreislauf zu zirkulieren;
eine erste Heizvorrichtung (6), dazu ausgelegt, das Heizmedium zu heizen;
eine zweite Heizvorrichtung (12), dazu ausgelegt, das Heizmedium in einem Fall, in dem eine Heizleistung der ersten Heizvorrichtung (6) nicht ausreicht, an einer der ersten Heizvorrichtung (6) nachgelagerten Position zu heizen;
Pumpensteuerungsmittel (104), dazu ausgelegt, einen Betrieb der Pumpe (15) so zu steuern, dass eine Zirkulationsströmungsrate des Heizmediums oder eine Betriebsdrehzahl der Pumpe (15) einem Zielwert entspricht; und
Heizleistungssteuerungsmittel (102), dazu ausgelegt, die Heizleistung der ersten Heizvorrichtung (6) so zu steuern, dass eine Heizmediumversorgungstemperatur, die eine Temperatur des an einen Wärmeaufnahmeabschnitt, der Wärme von dem Heizmedium empfängt, gesendeten Heizmediums ist, einer Zieltemperatur entspricht;
**dadurch gekennzeichnet, dass**
das Heizmediumsystem (1) ferner Prognosemittel (108) umfasst, dazu ausgelegt, zu prognostizieren, ob die zweite Heizvorrichtung (12) aktiviert wird, wobei
das Pumpensteuerungsmittel (104) dazu ausgelegt ist:

den Betrieb der Pumpe (15) so zu steuern, dass die Zirkulationsströmungsrate des Heizmediums oder die Betriebsdrehzahl der Pumpe (15) in einem Fall, in dem prognostiziert wird, dass die zweite Heizvorrichtung (12) nicht aktiviert wird, einem ersten Zielwert entspricht; und
den Betrieb der Pumpe (15) so zu steuern, dass die Zirkulationsströmungsrate des Heizmediums oder die Betriebsdrehzahl der Pumpe (15) in einem Fall, in dem prognostiziert wird, dass die zweite Heizvorrichtung (12) aktiviert wird, einem zweiten Zielwert entspricht, der größer als der erste Zielwert ist.

2. Heizmediumsystem (1) nach Anspruch 1, wobei
das Prognosemittel (108) dazu ausgelegt ist, zu prognostizieren, ob die zweite Heizvorrichtung (12) aktiviert wird, während die erste Heizvorrichtung (6) angehalten ist oder wenn die erste Heizvorrichtung (6) aktiviert ist.

3. Heizmediumsystem (1) nach Anspruch 1 oder 2, wobei
das Prognosemittel (108) dazu ausgelegt ist, zu prognostizieren, ob die zweite Heizvorrichtung (12) auf der Grundlage einer Außenlufttemperatur aktiviert wird.

4. Heizmediumsystem (1) nach Anspruch 1 oder 2, wobei
das Prognosemittel (108) dazu ausgelegt ist, zu prognostizieren, ob die zweite Heizvorrichtung (12) auf der Grundlage einer Aufzeichnung eines Betriebs der zweiten Heizvorrichtung (12) in einem zurückliegenden vorbestimmten Zeitraum aktiviert wird.

**Revendications**

1. Système de milieu chauffant (1) comprenant :

   une pompe (15) configurée pour faire circuler un milieu chauffant dans un circuit ;
   un premier dispositif chauffant (6) configuré pour chauffer le milieu chauffant;
   un second dispositif chauffant (12) configuré pour chauffer le milieu chauffant au niveau d'une position en aval du premier dispositif chauffant (6) dans un cas où une puissance de chauffage du premier dispositif chauffant (6) est insuffisante ;
   des moyens de contrôle de pompe (104) configurés pour contrôler un fonctionnement de la pompe (15) de telle sorte qu'un débit de circulation du milieu chauffant ou une vitesse de fonctionnement de la pompe (15) correspond à une valeur cible ; et
   des moyens de contrôle de puissance de chauffage (102) configurés pour contrôler la puissance de chauffage du premier dispositif chauffant (6) de telle sorte qu'une température d'alimentation en milieu chauffant, qui est une température du milieu chauffant envoyé à une section de réception de chaleur qui reçoit de la chaleur du milieu chauffant, correspond à une température cible ;
   **caractérisé en ce que**
   le système de milieu chauffant (1) comprend en outre des moyens de prédiction (108) configurés pour prédire si le second dispositif chauffant (12) sera activé, dans lequel
   les moyens de contrôle de pompe (104) sont configurés pour :

   contrôler le fonctionnement de la pompe (15) de telle sorte que le débit de circulation du milieu chauffant ou la vitesse de fonctionnement de la pompe (15) correspond à une premier valeur cible dans un cas où il est prédit que le second dispositif chauffant (12) ne sera pas activé ; et
   contrôler le fonctionnement de la pompe (15) de telle sorte que le débit de circulation du milieu chauffant ou la vitesse de fonctionnement de la pompe (15) correspond à une seconde valeur cible plus grande que la première valeur cible dans un cas où il est prédit que le second dispositif chauffant (12) sera activé.

2. Système de milieu chauffant (1) selon la revendication 1, dans lequel
   les moyens de prédiction (108) sont configurés pour prédire si le second dispositif chauffant (12) sera activé alors que le premier dispositif chauffant (6) est arrêté ou lorsque le premier dispositif chauffant (6) est activé.

3. Système de milieu chauffant (1) selon la revendication 1 ou 2, dans lequel
   les moyens de prédiction (108) sont configurés pour prédire si le second dispositif chauffant (12) sera activé sur la base d'une température de l'air extérieur.

4. Système de milieu chauffant (1) selon la revendication 1 ou 2, dans lequel
   les moyens de prédiction (108) sont configurés pour prédire si le second dispositif chauffant (12) sera activé sur la base d'un enregistrement d'un fonctionnement du second dispositif chauffant (12) dans une période de temps prédéterminée passée.

FIG. 1

# FIG. 2

Controller: 100

- MAIN HEAT SOURCE OPERATION DETERMINATION SECTION — 101
- MAIN HEAT SOURCE CAPACITY CONTROL SECTION — 102
- AUXILIARY HEAT SOURCE OPERATION DETERMINATION SECTION — 103
- PUMP CONTROL SECTION — 104
- SIGN DETERMINATION SECTION — 105

Inputs:
- 24 — MAIN HEAT SOURCE OUTLET TEMPERATURE SENSOR
- 25 — AUXILIARY HEAT SOURCE OUTLET TEMPERATURE SENSOR
- 26 — MAIN HEAT SOURCE INLET TEMPERATURE SENSOR
- 28 — ROOM TEMPERATURE SENSOR
- 27 — FLOW RATE SENSOR

Outputs:
- 6 — MAIN HEAT SOURCE
- 12 — AUXILIARY HEAT SOURCE
- 15 — HEATING MEDIUM PUMP

- 200 — REMOTE CONTROL

FIG. 3

100

1000                    1001

| PROCESSOR |     | MEMORY |

## FIG. 4

```
                  ┌─────────────┐
                  │    START    │
                  └──────┬──────┘
                         │
        ┌────────────────▼────────────────┐
        │ MAIN HEAT SOURCE                │ ～ S3101
        │ OPERATION DETERMINATION         │
        └────────────────┬────────────────┘
                         │           ～ S3102
                    ╱────▼────╲
                   ╱   DOES    ╲    YES
              ◄───┤ MAIN HEAT SOURCE ├──────┐
              │    ╲  OPERATE? ╱            │
              │     ╲─────────╱             │
              │ NO     ┌──────────────────────▼──────────────┐
              │        │ CONTROL MAIN HEAT                   │
              │        │ SOURCE CAPACITY SUCH THAT           │ ～ S3103
              │        │ MAIN HEAT SOURCE OUTLET             │
              │        │ TEMPERATURE MATCHES                 │
              │        │ FIRST TARGET TEMPERATURE            │
              │        └──────────────────┬──────────────────┘
              │                           │
              │        ┌──────────────────▼──────────────────┐
              │        │ DETERMINE PRESENCE OR               │
              │        │ ABSENCE OF SIGN OF                  │ ～ S3104
              │        │ OVERSHOOTING                        │
              │        └──────────────────┬──────────────────┘
              │                           │      ～ S3105
              │                      ╱────▼────╲
              │                     ╱   IS      ╲   YES
              │                 ◄──┤ SIGN OF OVERSHOOTING ├──┐
              │                     ╲  PRESENT? ╱           │
              │                      ╲─────────╱            │
              │                    NO    │     S3106        │
              │        ┌─────────────────▼───────┐          │
              │        │ CONTROL PUMP OPERATING  │          │
              │        │ SPEED SUCH THAT         │          │
              │        │ CIRCULATION FLOW RATE   │          │
              │        │ MATCHES TARGET VALUE    │          │  S3107
              │        └─────────────────┬───────┘    ┌─────▼──────────────────────┐
              │                          │            │ CONTROL PUMP OPERATING     │
              │                          │            │ SPEED SUCH THAT MAIN HEAT  │
              │                          │            │ SOURCE OUTLET TEMPERATURE  │
              │                          │            │ MATCHES SECOND TARGET      │
              │                          │            │ TEMPERATURE                │
              │                          │            └─────────────┬──────────────┘
              │                          │                          │
              │                          └────────────┬─────────────┘
              ▼                                        │
        ┌──────────┐◄────────────────────────────────┘
        │  RETURN  │
        └──────────┘
```

*FIG. 5*

START

S3201

MAIN HEAT
SOURCE OUTLET
TEMPERATURE ≧
SECOND TARGET
TEMPERATURE?

YES

NO

SIGN OF OVERSHOOTING
IS NOT PRESENT — S3202

SIGN OF OVERSHOOTING
IS PRESENT — S3203

RETURN

*FIG. 6*

```
                    ┌─────────┐
                    │  START  │
                    └────┬────┘
                         │
                         ▼
                    ╱─────────╲  S3301
                   ╱ HAS MAIN  ╲
                  ╱ HEAT SOURCE ╲  NO
                 ╱ INLET         ╲──────────┐
                 ╲ TEMPERATURE   ╱          │
                  ╲ RISEN BY 2°C╱           │
                   ╲ OR MORE IN╱            │
                    ╲1 MINUTE?╱             │
                     ╲───────╱              │
                      │ YES      S3302      │
                      ▼                     │
        ┌──────────────────────────┐       │
        │ SIGN OF OVERSHOOTING      │       │
        │ IS PRESENT                │       │
        └────────────┬─────────────┘       │
                     │                      ▼
                     │              ╱───────────────╲  S3303
                     │             ╱  DOES STATE IN  ╲
                     │            ╱ WHICH FLUCTUATION ╲  NO
                     │           ╱ RANGE OF MAIN HEAT  ╲─────┐
                     │           ╲ SOURCE INLET        ╱     │
                     │            ╲ TEMPERATURE IS     ╱      │
                     │             ╲ LESS THAN 2°C    ╱       │
                     │              ╲ CONTINUE FOR    ╱       │
                     │               ╲10 MINUTES?    ╱        │
                     │                ╲─────────────╱         │
                     │                   │ YES   S3304        │
                     │                   ▼                    │
                     │     ┌──────────────────────────┐       │
                     │     │ SIGN OF OVERSHOOTING      │       │
                     │     │ IS NOT PRESENT            │  S3305│
                     │     └────────────┬─────────────┘       ▼
                     │                  │        ┌──────────────────────┐
                     │                  │        │ MAINTAIN DETERMINATION│
                     │                  │        └───────────┬──────────┘
                     │                  │                    │
                     │                  ◄────────────────────┘
                     ▼                  ▼
                  ┌──────────┐
                  │  RETURN  │
                  └──────────┘
```

FIG. 7

# FIG. 8

```
                    ┌─────────┐
                    │  START  │
                    └─────────┘
                         │
                         ▼
        ┌─────────────────────────────┐
        │ MAIN HEAT SOURCE            │ ──── S4101
        │ OPERATION DETERMINATION     │
        └─────────────────────────────┘
                         │
                         ▼
                  ╱───────────╲           S4102
                 ╱ DOES MAIN    ╲   YES
                ╱  HEAT SOURCE   ╲─────────┐
                ╲  OPERATE?      ╱         │
                 ╲              ╱          │
                  ╲────────────╱           │
                     │ NO                  │
                     │                     ▼
                     │      ┌─────────────────────────────┐
                     │      │ DETERMINE FIRST TARGET VALUE │ ── S4103
                     │      │ OF CIRCULATION FLOW RATE     │
                     │      └─────────────────────────────┘
                     │                     │
                     │                     ▼
                     │             ╱───────────────╲     S4104
                     │            ╱       IS         ╲   NO
                     │           ╱  OVERSHOOTING      ╲──────┐
                     │           ╲ AT LOW LOAD FORECAST╱     │
                     │            ╲   TO OCCUR?       ╱      │
                     │             ╲────────────────╱       │
                     │                  │ YES                │
                     │                  ▼                    │
                     │      ┌─────────────────────────────┐  │
                     │      │ DETERMINE SECOND TARGET      │ ── S4105
                     │      │ VALUE OF CIRCULATION FLOW RATE│ │
                     │      └─────────────────────────────┘  │
                     │                  │◄──────────────────┘
                     │                  ▼
                     │      ┌─────────────────────────────┐
                     │      │ CONTROL PUMP OPERATING       │
                     │      │ SPEED SUCH THAT CIRCULATION  │ ── S4106
                     │      │ FLOW RATE MATCHES TARGET     │
                     │      │ VALUE                        │
                     │      └─────────────────────────────┘
                     │                  │
                     │                  ▼
                     │      ┌─────────────────────────────┐
                     │      │ CONTROL MAIN HEAT SOURCE     │
                     │      │ CAPACITY SUCH THAT MAIN HEAT │ ── S4107
                     │      │ SOURCE OUTLET TEMPERATURE    │
                     │      │ MATCHES TARGET TEMPERATURE   │
                     │      └─────────────────────────────┘
                     │                  │
                     ▼◄─────────────────┘
                ┌─────────┐
                │ RETURN  │
                └─────────┘
```

## FIG. 9

```
            ┌─────────────┐
            │    START    │
            └─────────────┘
                   │
                   ▼
    ┌──────────────────────────────┐
    │      MAIN HEAT SOURCE         │ ─── S5101
    │   OPERATION DETERMINATION     │
    └──────────────────────────────┘
                   │
                   ▼
              ╱─────────╲   ─── S5102
            ╱      IS      ╲
          ╱  ACTIVATION OF   ╲        YES
        ╱   MAIN HEAT SOURCE   ╲──────────┐
          ╲     NECESSARY?    ╱           │
            ╲               ╱             │
              ╲───────────╱               │
                   │ NO                   ▼
                   │      ┌──────────────────────────────┐
                   │      │  CALCULATE TARGET VALUE OF    │
                   │      │  CIRCULATION FLOW RATE THAT   │ ─── S5103
                   │      │  DOES NOT ALLOW OCCURRENCE OF │
                   │      │  OVERSHOOTING AT LOW LOAD     │
                   │      └──────────────────────────────┘
                   │                     │
                   │                     ▼
                   │      ┌──────────────────────────────┐
                   │      │    ACTIVATE MAIN HEAT SOURCE  │ ─── S5104
                   │      └──────────────────────────────┘
                   │                     │
                   │                     ▼
                   │      ┌──────────────────────────────┐
                   │      │  CONTROL PUMP OPERATING       │
                   │      │  SPEED SUCH THAT CIRCULATION  │ ─── S5105
                   │      │  FLOW RATE MATCHES TARGET VALUE│
                   │      └──────────────────────────────┘
                   │                     │
                   │                     ▼
                   │      ┌──────────────────────────────┐
                   │      │  CONTROL MAIN HEAT SOURCE     │
                   │      │  CAPACITY SUCH THAT MAIN HEAT │ ─── S5106
                   │      │  SOURCE OUTLET TEMPERATURE    │
                   │      │  MATCHES TARGET TEMPERATURE   │
                   │      └──────────────────────────────┘
                   │                     │
                   ◄─────────────────────┘
                   │
                   ▼
            ┌─────────────┐
            │   RETURN    │
            └─────────────┘
```

# FIG. 10

EP 3 312 515 B1

## FIG. 11

```
                    ┌─────────────┐
                    │    START    │
                    └──────┬──────┘
                           │
              ┌────────────▼──────────────┐
              │ MAIN HEAT SOURCE OPERATION │───── S6101
              │ DETERMINATION              │
              └────────────┬──────────────┘
                           │        S6102
                    ┌──────▼──────┐
                    │    DOES     │       YES
              ┌─────│ MAIN HEAT SOURCE │──────────┐
              │     │  OPERATE?   │              │
              │     └─────────────┘              │
           NO │                   ┌──────────────▼────────────┐
              │                   │ PREDICT WHETHER AUXILIARY  │──── S6103
              │                   │ HEAT SOURCE WILL BE ACTIVATED│
              │                   └──────────────┬────────────┘
              │                                  │
              │                           ┌──────▼──────┐
              │                           │     IS      │   S6104
              │                           │ ACTIVATION OF │        NO
              │                    ┌──────│ AUXILIARY HEAT SOURCE │──────┐
              │                    │      │  PREDICTED? │             │
              │                    │      └─────────────┘             │
              │                    │ YES      S6105                   │
              │          ┌─────────▼─────────────┐                   │
              │          │ DETERMINE SECOND TARGET VALUE OF │         │  S6106
              │          │ CIRCULATION FLOW RATE │   ┌───────────────▼─────────┐
              │          └─────────┬─────────────┘   │ DETERMINE FIRST TARGET VALUE OF │
              │                    │                 │ CIRCULATION FLOW RATE   │
              │                    │                 └───────────────┬─────────┘
              │                    │◄────────────────────────────────┘
              │          ┌─────────▼─────────────┐
              │          │ CONTROL PUMP OPERATING SPEED │
              │          │ SUCH THAT CIRCULATION FLOW RATE │──── S6107
              │          │ MATCHES TARGET VALUE  │
              │          └─────────┬─────────────┘
              │          ┌─────────▼─────────────┐
              │          │ CONTROL MAIN HEAT SOURCE │
              │          │ CAPACITY SUCH THAT MAIN HEAT │
              │          │ SOURCE OUTLET TEMPERATURE MATCHES │──── S6108
              │          │ TARGET TEMPERATURE    │
              │          └─────────┬─────────────┘
              │◄───────────────────┘
       ┌──────▼──────┐
       │   RETURN    │
       └─────────────┘
```

*FIG. 12*

```
                    ┌─────────┐
                    │  START  │
                    └────┬────┘
                         │
                         ▼
                        ╱ ╲              S6201
                      ╱     ╲
                    ╱         ╲         YES
         ╱ OUTSIDE AIR TEMPERATURE ╲──────────────┐
         ╲      < THRESHOLD ?      ╱               │
                    ╲         ╱                    │
                      ╲     ╱                      │
                        ╲ ╱                        │
                         │ NO                      │
                         ▼                         │
        ┌─────────────────────────┐               │
        │ PREDICT THAT AUXILIARY  │               │
        │ HEAT SOURCE WILL NOT    │  S6202        │
        │ BE ACTIVATED            │               │
        └────────────┬────────────┘               ▼
                     │          ┌─────────────────────────┐
                     │          │ PREDICT THAT AUXILIARY  │
                     │          │ HEAT SOURCE WILL BE     │  S6203
                     │          │ ACTIVATED               │
                     │          └────────────┬────────────┘
                     │◄───────────────────────┘
                     ▼
               ┌──────────┐
               │  RETURN  │
               └──────────┘
```

# FIG. 13

```
                    ┌──────────────┐
                    │    START     │
                    └──────┬───────┘
                           │
                           ▼
                      ╱─────────╲
                    ╱      IS      ╲
                  ╱    RECORD OF     ╲        ~S6301
                ╱    OPERATION OF      ╲
               ⟨  AUXILIARY HEAT SOURCE  ⟩
                ╲  IN PAST PREDETERMINED ╱  YES
                  ╲   TIME PERIOD      ╱ ─────────┐
                    ╲   PRESENT?     ╱            │
                      ╲─────────╱                 │
                           │ NO                   │
                           ▼                      │
            ┌──────────────────────────┐          │
            │ PREDICT THAT AUXILIARY   │          │
            │ HEAT SOURCE WILL NOT     │~S6302    │
            │ BE ACTIVATED             │          │
            └──────────────┬───────────┘          │
                           │                      ▼
                           │      ┌──────────────────────────┐
                           │      │ PREDICT THAT AUXILIARY   │
                           │      │ HEAT SOURCE WILL BE      │~S6303
                           │      │ ACTIVATED                │
                           │      └──────────────┬───────────┘
                           │◄────────────────────┘
                           ▼
                    ┌──────────────┐
                    │    RETURN     │
                    └──────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009287895 A
- EP 2530406 A1